# EUROPEAN PATENT SPECIFICATION

(11) **EP 2 186 715 B1**
(45) Date of publication and mention of the grant of the patent: **23.02.2011**
(21) Application number: 09090017.6
(22) Date of filing: 14.10.2009
(51) Int. Cl.: B62J 9/00

(54) **Anti-theft device for closing and locking a case on a rack of a motorcycle**
Diebstahlschutzvorrichtung zum Verschließen und Befestigen eines Koffers an einem Motorrad-Gepäckträger
Dispositif antivol pour fermer et verrouiller une mallette sur le porte-bagages d'une motocyclette

(30) Priority: 12.11.2008 TW 97220285 U
(43) Date of publication of application: 19.05.2010
(73) Proprietor: Kuan Mei Plastic Co., Ltd., Annan District Tainan City (TW)
(72) Inventor: Chung, Vincet, Tainan City (TW)
(74) Representative: Bressel, Burkhard

(56) References cited:
- EP-A- 0 370 368
- EP-A- 0 517 265
- EP-A- 1 063 157
- EP-A- 1 065 139
- WO-A-01/12496

## Description

This invention relates to a case of a motorcycle, more particularly to an easily operable anti-theft device for closing and locking a case on a rack of a motorcycle.

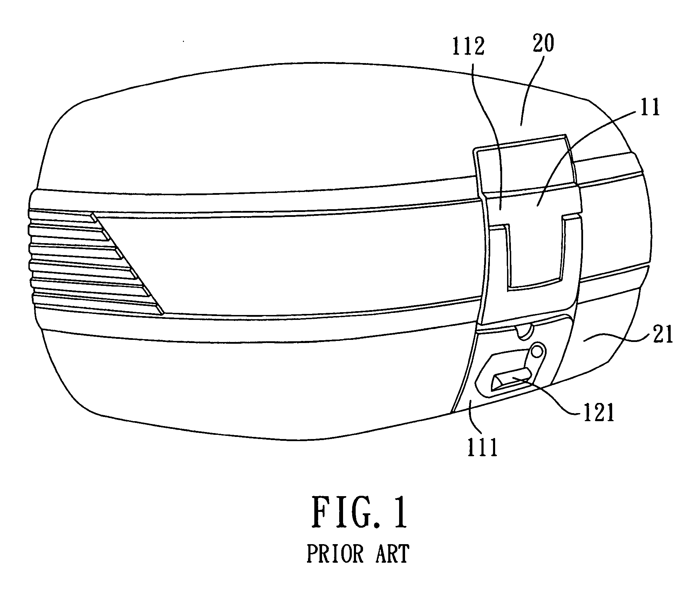

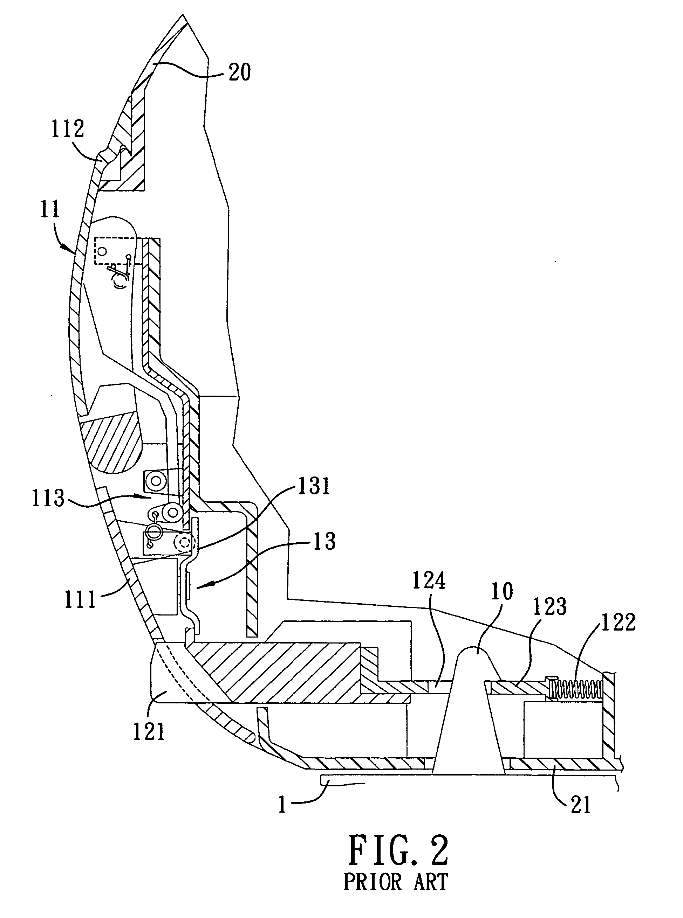

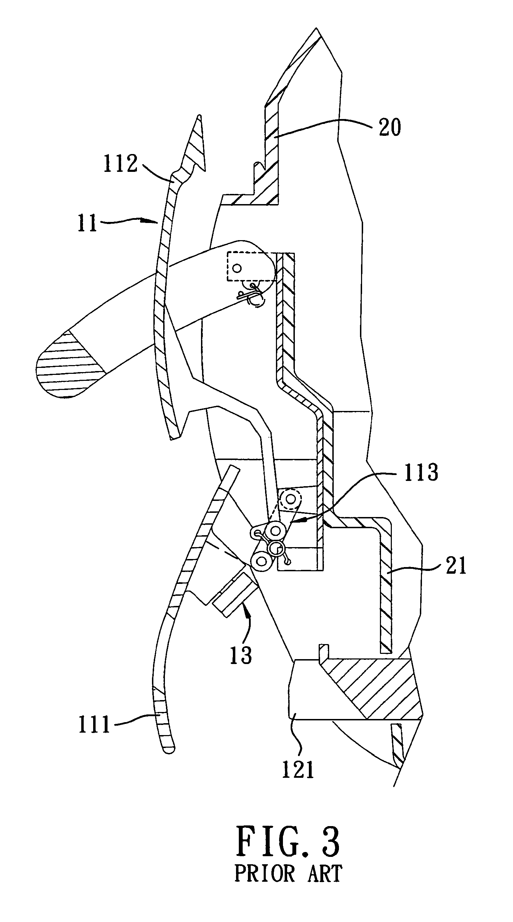

A luggage case is generally mounted on a rear rack of a motorcycle using an anti-theft device, such as that disclosed in EP 0 517 265 B1 which discloses an anti-theft device for closing and locking a case according to the preamble of claim 1. Referring to Figs. 1 to 3, a device as disclosed in said patent includes a coupling lever mechanism 11 which has a plate-like element 112 disposed to engage a counter-shell 20 of a case, and a locking plate 111 pivotally mounted to a shell 21 by a linkage 113. When the locking plate 111 is pulled out slightly, the linkage 113 is turned and the plate-like element 112 is thus rotated upward and toward the outside of the case (see Fig. 3). A button 121 acts on a slider 123 that is biased by a spring 122 and that is provided with a slot 124 for removable engagement with a locking tooth 10 protruding from a rack 1 of a motorcycle. The locking plate 111 and the button 121 are releaseably retained by a bolt 131 of a single-key lock 13. In order to prevent theft of the case, the locking plate 111 is disposed very close to the shell 21 so that there is a quite small clearance therebetween (see Fig. 2). This however renders pulling of the locking plate 111 when opening the counter-shell 20 inconvenient. In addition, when the lockingplate 111 is opened, as shown in Fig. 3, it is difficult for the user to operate the button 121 to release the engagement between the locking tooth 10 and the slot 124. The button 121 is operable only when the locking plate 111 is closed.

The object of the present invention is to provide an anti-theft device which is easily operable to close and lock a case on a rack of a motorcycle.

According to this invention, the anti-theft device includes lower and upper coupling mechanisms and a lock. The lower couplingmechanism includes a faceplate, a retained member, and a button. The upper coupling mechanism includes a mount plate, a carrier plate, a lever, and an anchoring plate.

The faceplate is adapted to be mounted on a shell of a case. The retained member is movable relative to the shell. The button has an operated end which extends outwardly of an insertion bore in the faceplate, and an actuating end which is movable between a normal position, where the retained member is engaged with a retaining member of a motorcycle rack, and a pressed position, where the retained member is disengaged from the retaining member.

The mount plate is adapted to be mounted on the shell, and includes a major mount wall, an anchor portion disposed on a lower mount region of the major mount wall, and a first hinge mounting portion which is disposed on the upper mount region. The carrier plate is disposed to confront the major mount wall, and has a lower carrier region having an access opening, and an upper carrier region hingedly connected to the first hinge mounting portion. The lever is pivotally mounted on the carrier plate, and has a power end extending outwardly of the access opening, and a weight end configured to engage the anchor portion such that, upon actuation of the power end, the weight end is moved to a disengaging position to disengage from the anchor portion, thereby permitting the carrier plate to be placed in an openable position where the carrier plate is turnable away from the mount plate. The anchoring plate has a hinged end hingedly mounted on the carrier plate, and an anchoring end configured to be kept in engagement with the counter-shell until the carrier plate is placed in the openable position. The lock includes a latch bolt which is configured to be externally operable by a key or a coded number to move between a locking position, where the latch bolt guards against movement of the weight end and the actuating end towards the disengaging position and the pressed position, respectively, and an unlocking position, where the weight end and the actuating end are permitted to move towards the disengaging position and the pressed position, respectively.

Other features and advantages of the present invention will become apparent in the following detailed description of the preferred embodiments of the invention, with reference to the accompanying drawings, in which:
Fig. 1 is a perspective view of a conventional case disclosed in EP 0 517 265 B1;
Fig. 2 is a sectional view of a closure and coupling device of the conventional case in a closed position;
Fig. 3 is a sectional view of the closure and coupling device in an open position;
Fig. 4 is a perspective view of the preferred embodiment of an anti-theft device according to this invention when detached from a case and a rack;
Fig. 5 is an exploded perspective view of the preferred embodiment;
Fig. 6 is a perspective view of the preferred embodiment when a lock is in a locking position;
Fig. 7 is a partly sectional rear view of the preferred embodiment when the lock is in an unlocking position;
Fig. 8 is a sectional view of the preferred embodiment when a button is in a normal position;
Fig. 9 is a fragmentary sectional view of the preferred embodiment after the button is moved to a pressed position;
Fig. 10 is a fragmentary sectional view of the preferred embodiment when the button is in the normal position;
Fig. 11 is a fragmentary sectional view of the preferred embodiment when the button is in the pressed position;
Fig. 12 is an exploded perspective view of another preferred embodiment of an anti-theft device according to this invention; and
Fig. 13 is a fragmentary sectional view of the preferred embodiment of Fig. 12.

Before the present invention is described in greater detail, it should be noted that same reference numerals have been used to denote like elements throughout the specification.

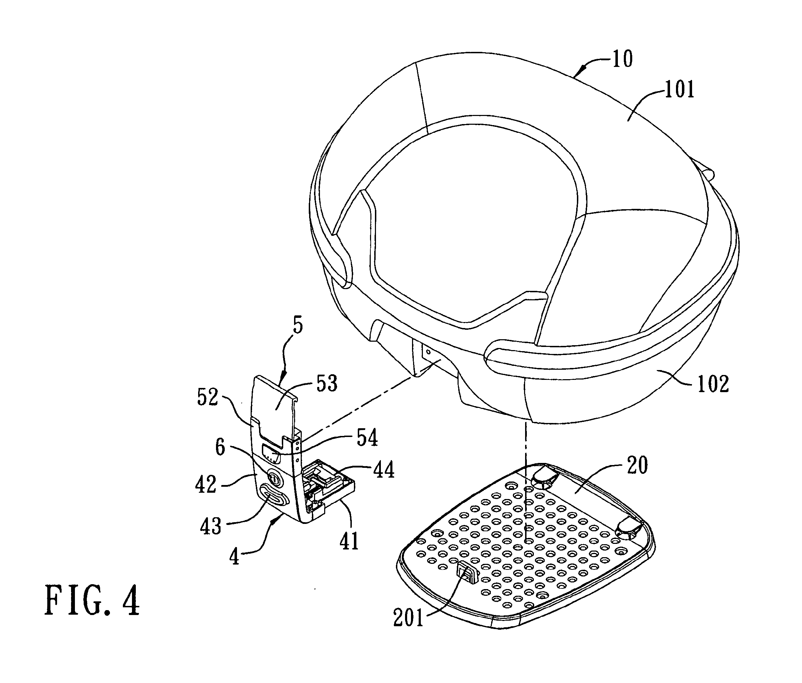

Referring to Fig. 4, the preferred embodiment of an anti-theft device according to the present invention is adapted to be mounted on a case 10 for closing a counter-shell 101 on a shell 102 of the case 10, and for locking the shell 102 to a rack 20 of a motorcycle (not shown). The counter-shell 101 is generally hingedly connected to the shell 102 such that the case 10 is movable between open and closed positions. The rack 20 is provided with a retaining member 201 in the form of a retaining ring 201 which extends upwardly and which has a retaining space 202.

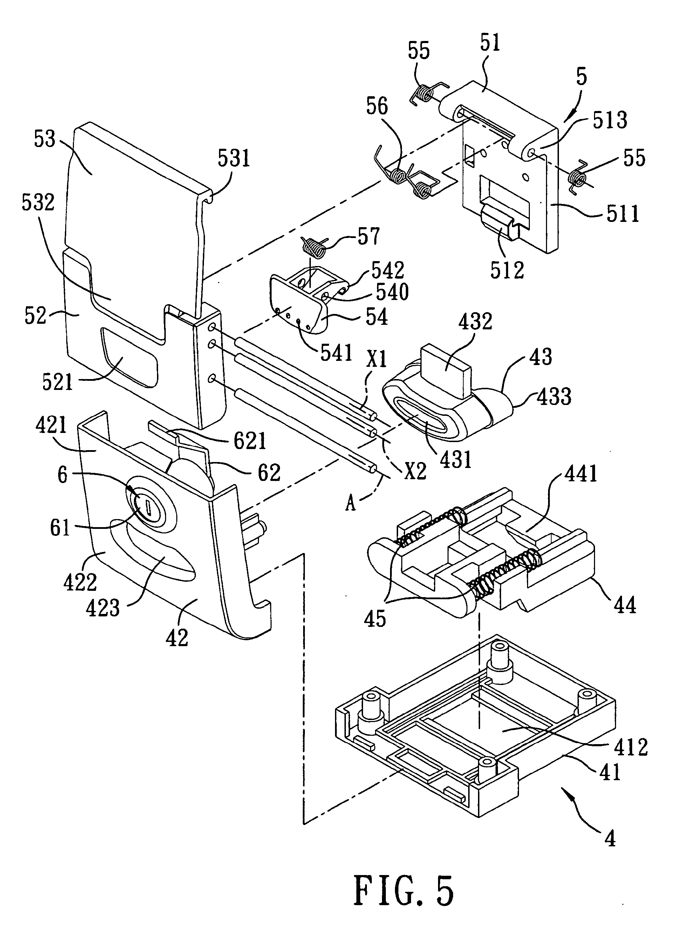

Referring to Figs. 5 to 8, the anti-theft device according to this embodiment comprises a lower coupling mechanism 4, an upper coupling mechanism 5, and a lock 6.

The lower coupling mechanism 4 includes a base frame 41, a faceplate 42, a retained member 44, a button 43, and two first biasing members 45.

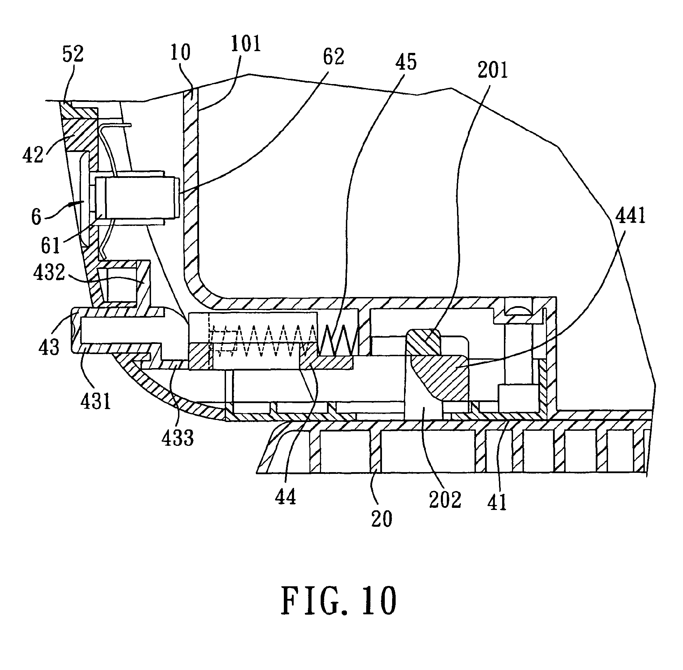

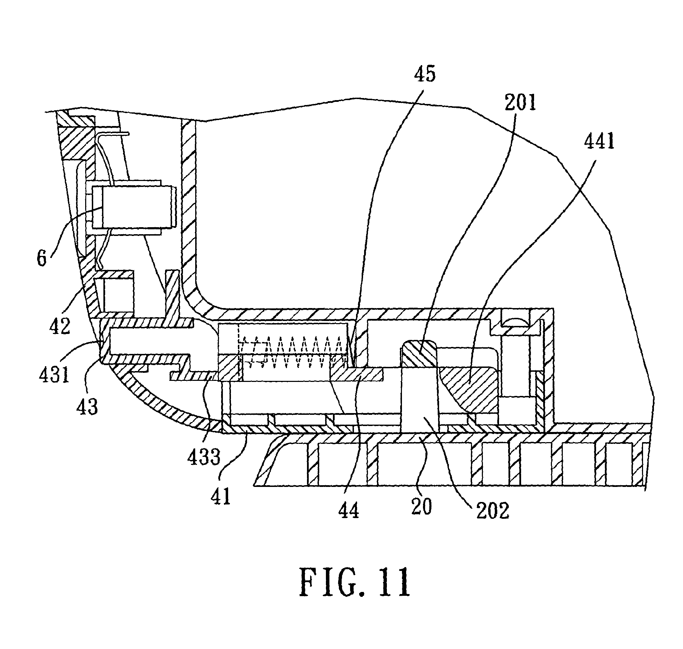

The base frame 41 has an opening 412, and is adapted to be fitted in and secured to a bottom wall of the shell 102 such that the retaining ring 201 extends through the opening 412. The faceplate 42 is adapted to be mounted on a front segment of the shell 102, and has seat and mount portions 421,422 opposite to each other in an upright direction. The mount portion 422 has an insertion bore 423. The retained member 44 is mounted on the base frame 41 to be movable in a longitudinal direction, and is provided with a retained protrusion 441. The button 43 has an operated end 431 which extends outwardly of the insertion bore 423 and which is manually operable, and an actuating end 433 which is movable in the longitudinal direction between a normal position, as shown in Fig. 10, where the retained member 44 is engaged with the retaining ring 201 while the retained protrusion 441 is received in the retaining space 202, and a pressed position, as shown in Fig. 11, where the retained member 44 is disengaged from the retaining ring 201 to permit detachment of the case 10 from the rack 20. The button 43 further has a rear abutted portion 432 extending upwardly and disposed between the operated and actuating ends 431,433. The first biasing members 45 are disposed between the retained member 44 and the shell 102 to bias the retained member 44 in the longitudinal direction so as to enable the retained member 44 to be engaged with the retaining member 201.

The upper coupling mechanism 5 includes a mount plate 51, a carrier plate 52, a lever 54, an anchoring plate 53, two second biasing members 55, a third biasing member 56, and a fourth biasing member 57.

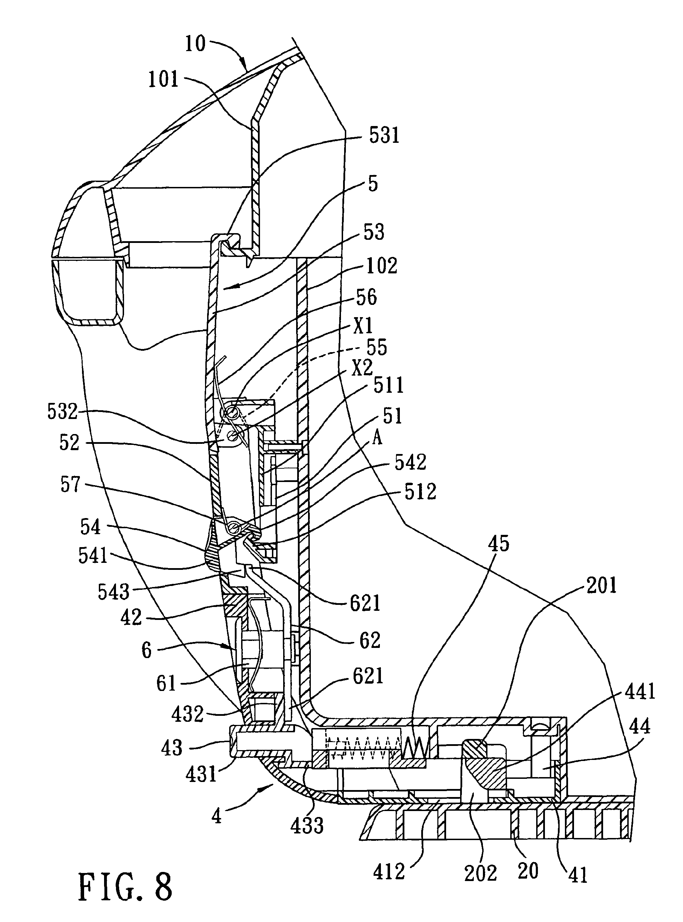

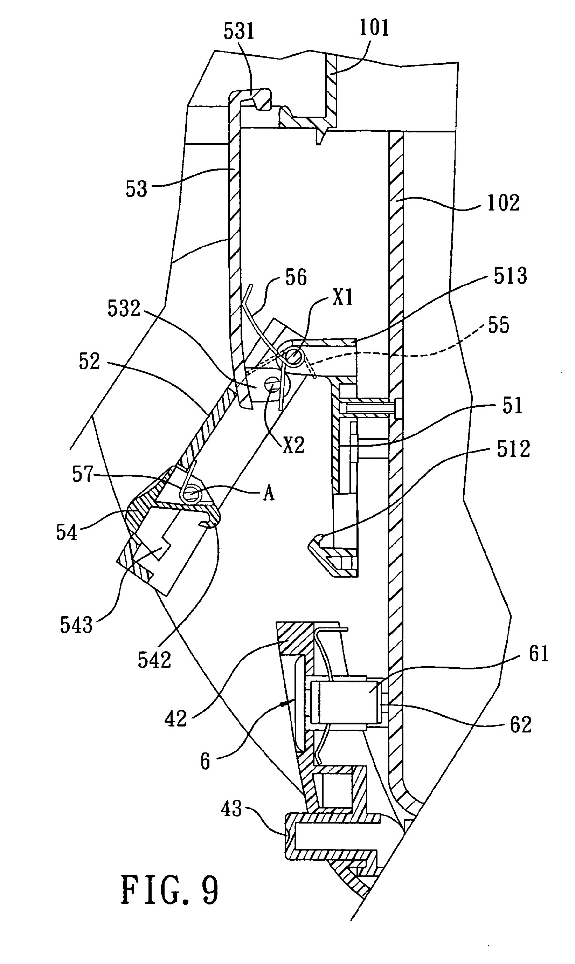

The mount plate 51 is adapted to be securely mounted on the front segment of the shell 102, and includes a major mount wall 511 which has upper and lower mount regions, an anchor portion 512 disposed on the lower mount region, and a first hinge mounting portion 513 which is disposed on the upper mount region. The carrier plate 52 is disposed to confront the major mount wall 511, and has a lower carrier region which.has an access opening 521, and an upper carrier region which is hingedly connected to the first hinge mounting portion 513 about a first hinge axis (X1) in a transverse direction relative to the longitudinal and upright directions. The lever 54 has a fulcrum 540 pivotally mounted on the carrier plate 52 about a pivot axis (A) parallel to the first hinge axis (X1), a power end 541 which extends outwardly of the access opening 521, and a weight end 542 which is configured as a hook that engages the anchor portion 512, as shown in Fig. 8. Upon actuation of the power end 541, the weight end 542 is moved to a disengaging position to disengage from the anchor portion 512, thereby permitting the carrier plate 52 to be placed in an openable position, where the lower carrier region is turnable about the first hinge axis (X1) away from the mount plate 51, as shown in Fig. 9. The lever 54 further has a rear abutted portion 543 facing rearwardly. The anchoring plate 53 has a hinged end 532 which is hingedly mounted on the carrier plate 52 about a second hinge axis (X2) that is parallel to the first hinge axis (X1) and that is disposed between the first hinge axis (X1) and the pivot axis (A), and an anchoring end 531 which is configured to be kept in engagement with the counter-shell 101 until the carrier plate 52 is placed in the openable position. The second biasing members 55 are disposed between the first hinge mounting portion 513 and the carrier plate 52 to bias the lower carrier region of the carrier plate 52 to turn about the first hinge axis (X1) away from the mount plate 51 and towards a fully opened position. The third biasing member 56 is disposed between the anchoring plate 53 and the carrier plate 52 to bias the anchoring end 531 to turn about the second hinge axis (X2) such that, once the carrier plate 52 is displaced to the fully opened position, the anchoring end 531 is disengaged from the counter-shell 101. The fourth biasing member 57 is disposed to bias the weight end 542 to engage the anchor portion 512.

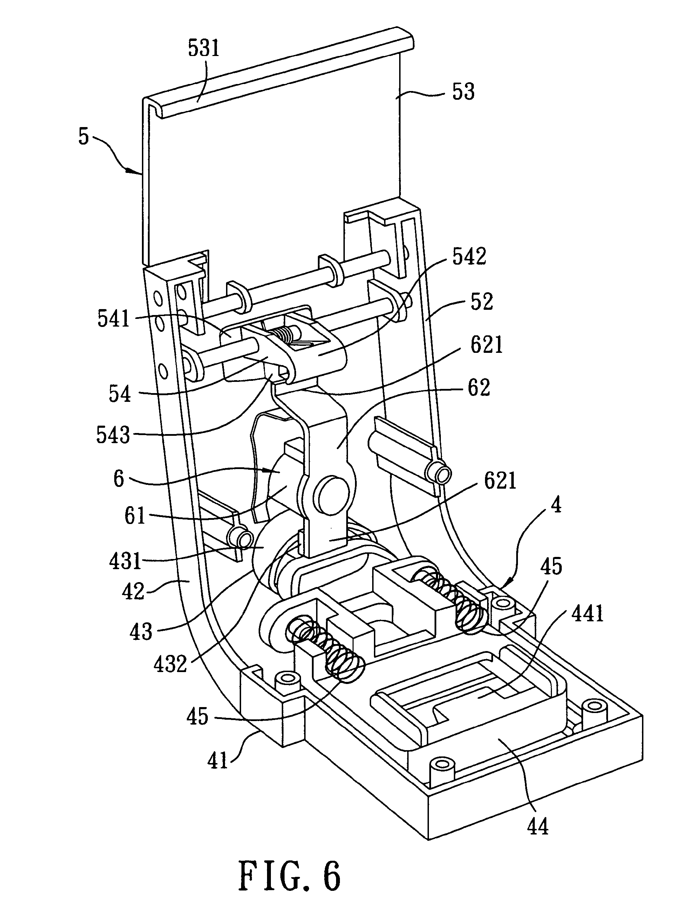

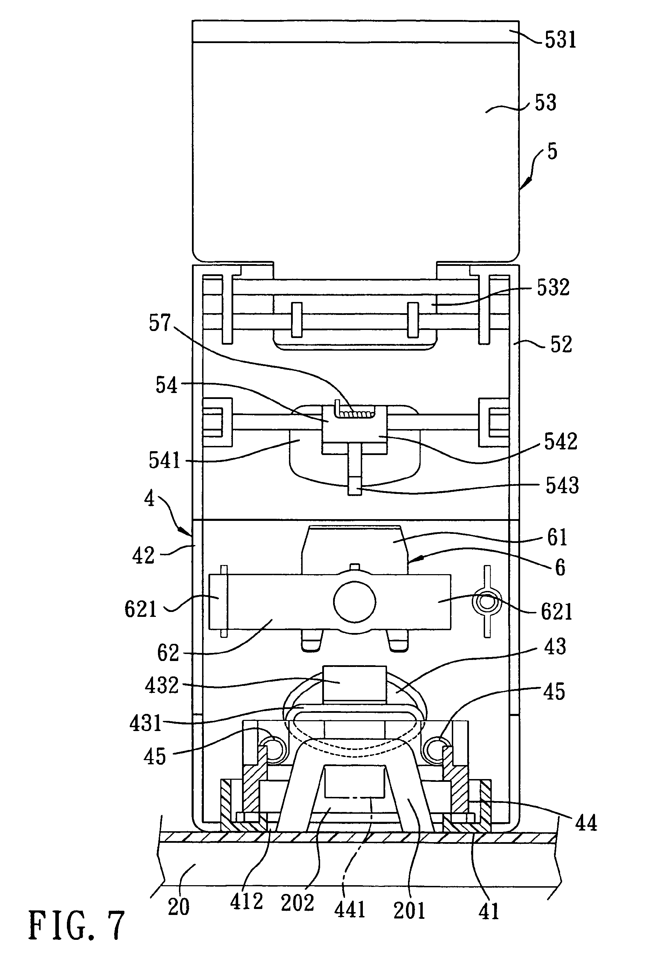

The lock 6 includes a lock body 61 disposed in the seat portion 421 and externally operable with use of a single key (not shown), and a latch bolt 62 which has two retaining ends 621 and which is turnable between a locking position, where the retaining ends 621 respectively abut against the rear abutted portions 543,432, as shown in Figs. 6 and 8, so as to guard against movement of the weight end 542 and the actuating end 433 towards the disengaging position and the pressed position, respectively, and an unlocking position, as shown in Fig. 7, where both the weight end 542 and the actuating end 433 are permitted to move towards the disengaging position and the pressed position, respectively.

As shown in Figs. 5, 8 and 9, when it is desired to open the counter-shell 101, the latch bolt 62 is turned with the use of a key, and the lever 54 is pressed to enable the weight end 542 to turn and disengage from the anchor portion 512. The carrier plate 52 can be turned away from the mount plate 51 by means of the second biasing members 55, and the anchoring end 531 of the anchoring plate 53 can be turned upwardly and outwardly to disengage from the counter-shell 101 by means of the third biasing member 56, thereby permitting opening of the counter-shell 101.

As shown in Figs. 5, 10 and 11, when it is desired to detach the case 10 from the rack 20, and when the latch bolt 62 is in the unlocking position, the button 43 is pressed to place the button 43 in the pressed position to permit disengagement of the retained protrusion 441 from the retaining ring 201. Hence, the case 10 can be easily removed from the rack 20.

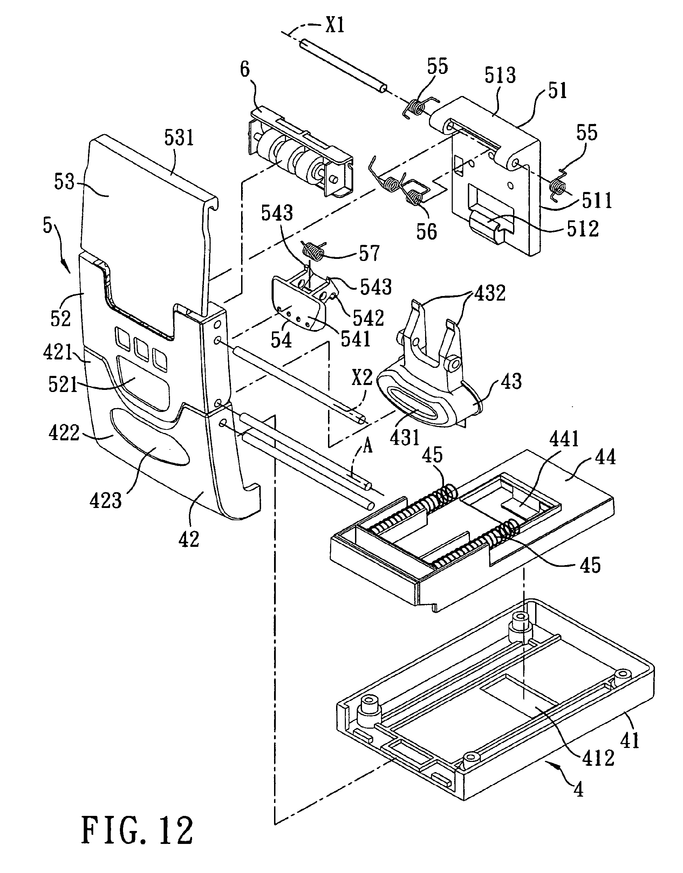

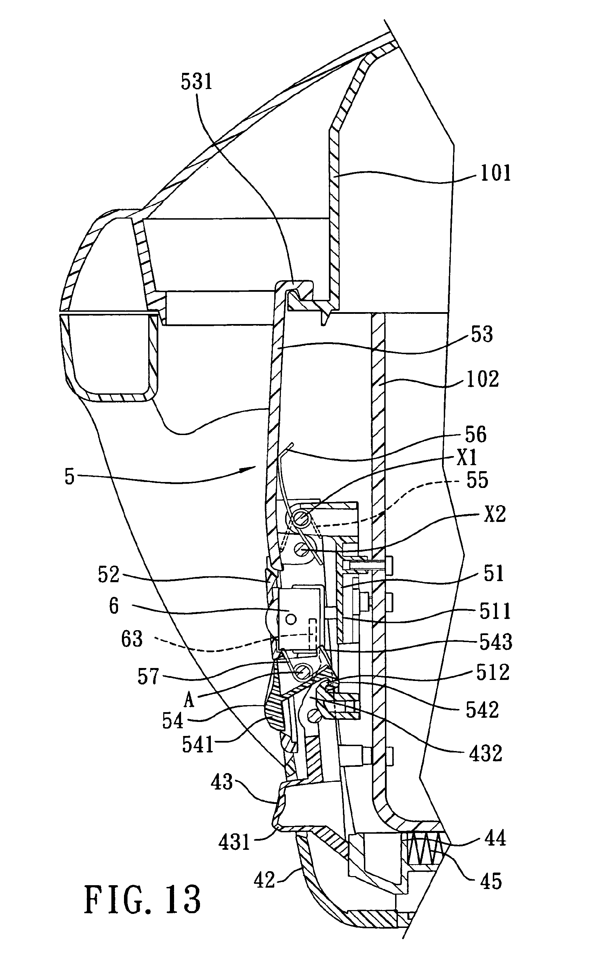

Referring to Figs. 12 and 13, another preferred embodiment of an anti-theft device according to this invention is similar to the aforesaid embodiment in construction, except that the button 43 has two rear abutted portions 432 extending upwardly and spaced apart from each other, the lever 54 has two rear abutted portions 543 extending upwardly and spaced apart from each other, and the lock 6 is a known combination lock and has a latch bolt 63 that is operable by coded numbers to move between the locking and unlocking positions.

As illustrated, by means of the lock 6 which can retain both the lever 54 and the button 43, the counter-shell 101 can close the shell 102 while the case 10 is retained on the rack 20. Once the lock 6 is turned to the unlocking position, the user can press the lever 54 and the button 43 independently to open the counter-shell 101 and detach the case 10 from the rack 20 without the need to apply additional forces. The operations of the upper and lower coupling mechanisms 4,5 are independent and do not interfere with each other. Besides, assembly of the first biasing members 45 to the retained member 44 is relatively easy to conduct by virtue of the structure of the retained member 44.

## Claims

1. An anti-theft device for closing and locking a case (10) on a rack (20) of a motorcycle, the case (10) including a shell (102) and a counter-shell (101) hingedly connected to the shell (102) such that the case (10) is movable between open and closed positions, the shell having a front segment and a bottom wall, the rack (20) being provided with a retaining member (201) which extends upwardly, said anti-theft device comprising:
a faceplate (42) adapted to be mounted on the front segment, and having seat and mount portions (421,422) opposite to each other in an upright direction, said mount portion (422) having an insertion bore (423);
a retained member (44) disposed to be movable in a longitudinal direction relative to the bottom wall;
a button (43) including an operated end (431) which extends outwardly of said insertion bore (423) and which is manually operable, and an actuating end (433) which is movable in the longitudinal direction between a normal position, where said retained member (44) is engaged with the retaining member (201), and a pressed position, where said retained member (44) is disengaged from the retaining member (201);
a mount plate (51) adapted to be mounted on the front segment, and including
a major mount wall (511) which has upper and lower mount regions,
and
a first hinge mounting portion (513) which is disposed on said upper mount region;
a carrier plate (52) disposed to confront said major mount wall (511), and having a lower carrier region which has an access opening (521), and an upper carrier region;
a lever (54) having a fulcrum (540) and
a lock (6) disposed in said seat portion (421), and including a latch bolt (62,63) which is configured to be externally operable by a key or a coded number to move between a locking position, where said latch bolt (62,63) guards against movement of said actuating end (433) towards the pressed position and an unlocking position, where said actuating end (433) is permitted to move towards the pressed position, said anti-theft device being **characterized in that**:
said mount plate (51) further includes an anchor portion (512) disposed on said lower mount region;
said upper carrier region of said carrier plate (52) being hingedly connected to said first hinge mounting portion (513) about a first hinge axis (X1);
said fulcrum (540) of said lever (54) being pivotally mounted on said carrier plate (52) about a pivot axis (A) ;
said lever (54) further having a power end (541) which extends outwardly of said access opening (521), and a weight end (542) which is configured to engage said anchor portion (512) such that, upon actuation of said power end (541), said weight end (542) is moved to a disengaging position to disengage from said anchor portion (512), thereby permitting said carrier plate (52) to be placed in an openable position, where said lower carrier region is turnable about the first hinge axis (X1) away from said mount plate (51);
said anti-theft device further comprising an anchoring plate (53) having a hinged end (532) which is hingedly mounted on said carrier plate (52) about a second hinge axis (X2), and an anchoring end (531) which is configured to be kept in engagement with the counter-shell (101) until said carrier plate (52) is placed in the openable position;
said weight end (542) of said lever (54) being guarded against movement towards the disengaging position when said latch bolt (62,63) is in the locking position, and being permitted to move towards the disengaging position when said latch bolt (62,63) is in the unlocking position.

2. The anti-theft device according to Claim 1, **characterized in that** the pivot, first hinge and second hinge axes (A,X1,X2) are parallel to one another and extend in a transverse direction relative to the upright and longitudinal directions, and the second hinge axis (X2) is interposed between said pivot and first hinge axes (A,X1).

3. The anti-theft device according to Claim 1, **characterized in that** said anti-theft device further comprising a first biasing member (45) disposed to bias said retained member (44) in the longitudinal direction so as to enable said retained member (44) to be engaged with the retaining member (201).

4. The anti-theft device according to Claim 1, **characterized in that** said anti-theft device further comprising:
a second biasing member (55) disposed to bias said lower carrier region of said carrier plate (52) to turn about the first hinge axis (X1) away from said mount plate (51) and towards a fully opened position; and
a third biasing member (56) disposed between said anchoring plate (53) and said carrier plate (52) to bias said anchoring end (531) to turn about the second hinge axis (X2) such that, once said carrier plate (52) is displaced to the fully opened position, said anchoring end (531) is disengaged from the counter-shell (101).

5. The anti-theft device according to Claim 1, **characterized in that** said anti-theft device further comprising a fourth biasing member (57) disposed to bias said weight end (542) to engage said anchor portion (512).

6. The anti-theft device according to Claim 1, **characterized in that** each of said button (43) and said lever (54) has a rear abutted portion (432,543), said latch bolt (62) being disposed to be turnable between the locking and unlocking positions, and having two retaining ends (621) which are disposed to respectively abut against said rear abutted portions in the locking position.

7. The anti-theft device according to Claim 3, **characterized in that** the retaining member (201) is a retaining ring which defines a retaining space (202), said anti-theft device further comprising a base frame (41) which has an opening (412), and which is adapted to be fitted in and secured to the bottom wall such that the retaining ring (201) extends through said opening (412), said retained member (44) being movably mounted on said base frame (41) and being provided with a retained protrusion (441) such that, when said actuating end (433) is in the normal position, said retained member (44) is biased by said first biasing member (45) to engage with the retaining ring (201) while said retained protrusion (441) is brought to move forwards so as to be received in the retaining space (202).

## Patentansprüche

1. Diebstahlschutzvorrichtung zum Verschließen und Verriegeln eines Behälters (10) an einem Gepäckträger (20) eines Motorrads, wobei der Behälter (10) eine Kapsel (102) und eine Gegenkapsel (101), die mit der Kapsel (102) gelenkig verbunden ist, enthält, sodass der Behälter (10) zwischen einer offenen und einer geschlossenen Stellung beweglich ist, wobei die Kapsel ein vorderes Segment und eine Bodenwand aufweist, wobei der Gepäckträger (20) mit einem Halteelement (201) versehen ist, das nach oben verläuft, wobei die Diebstahlschutzvorrichtung umfasst:
eine Blende (42), die an dem vorderen Segment angebracht werden kann und einen Sitz- und einen Montageabschnitt (421, 422) aufweist, die in einer Richtung nach oben einander gegenüberliegen, wobei der Montageabschnitt (422) eine Einführungsbohrung (423) aufweist;
ein gehaltenes Element (44), das so angeordnet ist, dass es in einer Längsrichtung relativ zu der Bodenwand beweglich ist;
einen Knopf (43), der ein betriebenes Ende (431), das aus der Einführungsbohrung (423) nach außen verläuft und das von Hand zu betreiben ist, und ein Betätigungsende (433), das in der Längsrichtung zwischen einer Normalstellung, in der das gehaltene Element (44) mit dem Halteelement (201) in Eingriff ist, und einer gedrückten Stellung,
in der das gehaltene Element (44) von dem Halteelement (201) gelöst ist, beweglich ist, enthält;
eine Montageplatte (51), die an dem vorderen Segment angebracht werden kann und enthält:
eine Hauptmontagewand (511), die ein oberes und ein unteres Montagegebiet aufweist,
und
einen ersten Scharniermontageabschnitt (513), der an dem oberen Montagegebiet angeordnet ist;
eine Trägerplatte (52), die so angeordnet ist, dass sie der Hauptmontagewand (511) gegenübersteht, und die ein unteres Trägergebiet, das eine Zugangsöffnung (521) aufweist, und ein oberes Trägergebiet aufweist;
einen Hebel (54), der einen Drehpunkt (540) aufweist, und
ein Schloss (6), das in dem Sitzabschnitt (421) angeordnet ist und das einen Fallenriegel (62, 63) enthält, der so konfiguriert ist, dass er durch einen Schlüssel oder
durch eine Codezahl von außen betrieben werden kann, um sich zwischen einer Verriegelungsstellung, in der der Fallenriegel (62, 63) vor Bewegung des Betätigungsendes (433) in Richtung der gedrückten Stellung schützt, und einer Entriegelungsstellung, in der sich das Betätigungsende (433) in Richtung der gedrückten Stellung bewegen kann, zu bewegen, wobei die Diebstahlschutzvorrichtung **dadurch gekennzeichnet ist, dass**
die Montageplatte (51) ferner einen Verankerungsabschnitt (512) enthält, der an dem unteren Montagegebiet angebracht ist;
das obere Trägergebiet der Trägerplatte (52) mit dem ersten Scharniermontageabschnitt (513) um eine erste Scharnierachse (X1) gelenkig verbunden ist;
der Drehpunkt (540) des Hebels (54) um eine Schwenkachse (A) schwenkbar an der Trägerplatte (52) angebracht ist;
der Hebel (54) ferner ein Kraftende (541), das aus der Zugangsöffnung (521) nach außen verläuft, und ein Gewichtsende (542), das so konfiguriert ist, dass es mit dem Verankerungsabschnitt (512) in Eingriff ist, aufweist, sodass bei Betätigung des Kraftendes (541) das Gewichtsende (542) in eine Lösungsstellung bewegt wird, um sich von dem Verankerungsabschnitt (512) zu lösen, wodurch zugelassen wird, dass die Trägerplatte (52) in einer öffnungsfähigen Stellung angeordnet wird, in der das untere Trägergebiet um die erste Scharnierachse (X1) von der Montageplatte (51) weg schwenkbar ist;
wobei die Diebstahlschutzvorrichtung ferner eine Verankerungsplatte (53) umfasst, die ein angelenktes Ende (532), das an der Trägerplatte (52) um eine zweite Scharnierachse (X2) gelenkig angebracht ist, und ein Verankerungsende (531), das so konfiguriert ist, dass es mit der Gegenkapsel (101) in Eingriff gehalten wird, bis die Trägerplatte (52) in der öffnungsfähigen Stellung angeordnet ist, aufweist;
wobei das Gewichtsende (542) des Hebels (54) vor Bewegung in Richtung der Lösungsstellung geschützt wird, wenn der Fallenriegel (62, 63) in der Verriegelungsstellung ist, und sich in Richtung der Lösungsstellung bewegen kann, wenn der Fallenriegel (62, 63) in der Entriegelungsstellung ist.

2. Diebstahlschutzvorrichtung nach Anspruch 1, **dadurch gekennzeichnet, dass** die Schwenk-, die erste Scharnier- und die zweite Scharnierachse (A, X1, X2) zueinander parallel sind und in einer Querrichtung relativ zu der Richtung nach oben und zu der Längsrichtung verlaufen und dass die zweite Scharnierachse (X2) zwischen der Schwenk- und der ersten Scharnierachse (A, X1) liegt.

3. Diebstahlschutzvorrichtung nach Anspruch 1, **dadurch gekennzeichnet, dass** die Diebstahlschutzvorrichtung ferner ein erstes Vorbelastungselement (45) umfasst, das so angeordnet ist, dass es das gehaltene Element (44) in der Längsrichtung vorbelastet, um zu ermöglichen, dass das gehaltene Element (44) mit dem Halteelement (201) in Eingriff gelangt.

4. Diebstahlschutzvorrichtung nach Anspruch 1, **dadurch gekennzeichnet, dass** die Diebstahlschutzvorrichtung ferner umfasst:
ein zweites Vorbelastungselement (55), das so angeordnet ist, dass es das untere Trägergebiet der Trägerplatte (52) vorbelastet, damit es um die erste Scharnierachse (X1) von der Montageplatte (51) weg und in Richtung einer vollständig geöffneten Stellung schwenkt; und
ein drittes Vorbelastungselement (56), das zwischen der Verankerungsplatte (53) und der Trägerplatte (52) angeordnet ist, um das Verankerungsende (531) vorzubelasten, damit es um die zweite Schwenkachse (X2) schwenkt, sodass das Verankerungsende (531) von der Gegenkapsel (101) gelöst wird, wenn die Trägerplatte (52) in die vollständig geöffnete Stellung verlagert wird.

5. Diebstahlschutzvorrichtung nach Anspruch 1, **dadurch gekennzeichnet, dass** die Diebstahlschutzvorrichtung ferner ein viertes Vorbelastungselement (57) umfasst, das so angeordnet ist, dass es das Gewichtsende (542) vorbelastet, damit es mit dem Verankerungsabschnitt (512) in Eingriff gelangt.

6. Diebstahlschutzvorrichtung nach Anspruch 1, **dadurch gekennzeichnet, dass** sowohl der Knopf (43) als auch der Hebel (54) einen hinteren anliegenden Abschnitt (432, 543) aufweist, wobei der Verriegelungsbolzen (62) in der Weise angeordnet ist, dass er zwischen der Verriegelungs- und der Entriegelungsstellung schwenkbar ist und zwei Halteenden (621) aufweist, die so angeordnet sind, dass sie in der Verriegelungsstellung jeweils an den hinteren anliegenden Abschnitten anliegen.

7. Diebstahlschutzvorrichtung nach Anspruch 3, **dadurch gekennzeichnet, dass** das Halteelement (201) ein Haltering ist, der einen Halteraum (202) definiert, wobei die Diebstahlschutzvorrichtung ferner einen Grundrahmen (41) umfasst, der eine Öffnung (412) aufweist und der in die Bodenwand eingepasst und daran befestigt werden kann, sodass der Haltering (201) durch die Öffnung (412) verläuft, wobei das gehaltene Element (44) beweglich an dem Grundrahmen (41) angebracht ist und mit einem gehaltenen Vorsprung (441) versehen ist, sodass das gehaltene Element (44) durch das erste Vorbelastungselement (45) vorbelastet wird, damit es mit dem Haltering (201) in Eingriff gelangt, während der gehaltene Vorsprung (441) dazu gebracht wird, sich nach vorn zu bewegen, um in dem Halteraum (202) aufgenommen zu werden, wenn das Betätigungsende (433) in der Normalstellung ist.

## Revendications

1. Dispositif antivol pour fermer et verrouiller une caisse (10) sur un porte-bagages (20) d'un motocycle, la caisse (10) comprenant une coque (102) et une contre-coque (101) reliée de façon articulée à la coque (102) de sorte que la caisse (10) soit mobile entre des positions ouverte et fermée, la coque comportant un segment avant et une paroi inférieure, le porte-bagages (20) étant pourvu d'un élément de retenue (201) qui s'étend vers le haut, ledit dispositif antivol comprenant :
une plaque de face (42) adaptée pour être montée sur le segment avant, et comportant des parties de siège et de montage (421, 422) opposées l'une à l'autre dans une direction verticale, ladite partie de montage (422) comportant un alésage d'insertion (423) ;
un élément retenu (44) disposé pour être mobile dans une direction longitudinale par rapport à la paroi inférieure ;
un bouton (43) comprenant une extrémité actionnée (431) qui s'étend vers l'extérieur dudit alésage d'insertion (423) et qui est actionnable manuellement, et une extrémité d'actionnement (433) qui est mobile dans la direction longitudinale entre une position normale, où ledit élément retenu (44) est en prise avec l'élément de retenue (201), et une position comprimée, où ledit élément retenu (44) est séparé de l'élément de retenue (201) ;
une plaque de montage (51) adaptée pour être montée sur le segment avant, et comprenant
- une paroi de montage principale (511) qui comporte des régions de montage supérieure et inférieure,
et
- une première partie de montage d'articulation (513) qui est disposée sur ladite région de montage supérieure ;
une plaque de support (52) disposée pour être opposée à ladite paroi de montage principale (511), et comportant une région de support inférieure qui comporte une ouverture d'accès (521), et une région de support supérieure ;
un levier (54) comportant un point d'appui (540) et
un verrou (6) disposé dans ladite partie de siège (421), et comprenant un pêne demi-tour (62, 63) qui est configuré pour être extérieurement actionnable par une clef ou un numéro codé pour se déplacer entre une position de verrouillage, où ledit pêne demi-tour (62, 63) empêche le mouvement de ladite extrémité d'actionnement (433) vers la position comprimée et une position de déverrouillage, où ladite extrémité d'actionnement (433) peut se déplacer vers la position comprimée, ledit dispositif antivol étant **caractérisé en ce que** :
ladite plaque de montage (51) comprend en outre une partie d'ancrage (512) disposée sur ladite région de montage inférieure ;
ladite région de support supérieure de ladite plaque de support (52) étant reliée de façon articulée à ladite première partie de montage d'articulation (513) autour d'un premier axe d'articulation (X1) ;
ledit point d'appui (540) dudit levier (54) étant monté de façon pivotante sur ladite plaque de support (52) autour d'un axe de pivotement (A) ;
ledit levier (54) comportant en outre une extrémité à force (541) qui s'étend vers l'extérieur de ladite ouverture d'accès (521), et une extrémité à poids (542) qui est configurée pour entrer en prise avec ladite partie d'ancrage (512) de sorte que, lors de l'actionnement de ladite extrémité à force (541), ladite extrémité à poids (542) soit déplacée jusqu'à une position de séparation pour se séparer de ladite partie d'ancrage (512), permettant ainsi à ladite plaque de support (52) d'être positionnée dans une position ouvrable, où ladite région de support inférieure peut être tournée autour du premier axe d'articulation (X1) pour être éloignée de ladite plaque de montage (51) ;
ledit dispositif antivol comprenant en outre une plaque d'ancrage (53) comportant une extrémité articulée (532) qui est montée de façon articulée sur ladite plaque de support (52) autour d'un second axe d'articulation (X2), et une extrémité d'ancrage (531) qui est configurée pour être maintenue en prise avec la contre-coque (101) jusqu'à ce que ladite plaque de support (52) soit positionnée dans la position ouvrable ;
ladite extrémité à poids (542) dudit levier (54) étant empêchée de se déplacer vers la position de séparation lorsque ledit pêne demi-tour (62, 63) est dans la position de verrouillage, et pouvant se déplacer vers la position de séparation lorsque ledit pêne demi-tour (62, 63) est dans la position de déverrouillage.

2. Dispositif antivol selon la revendication 1, **caractérisé en ce que** l'axe de pivotement, les premier et second axes d'articulation (A, X1, X2) sont parallèles les uns aux autres et s'étendent dans une direction transversale par rapport aux directions verticale et longitudinale, et le second axe d'articulation (X2) est interposé entre ledit axe de pivotement et ledit premier axe d'articulation (A, X1).

3. Dispositif antivol selon la revendication 1, **caractérisé en ce que** ledit dispositif antivol comprend en outre un premier élément de sollicitation (45) disposé pour solliciter ledit élément retenu (44) dans la direction longitudinale afin de permettre audit élément retenu (44) d'être en prise avec l'élément de retenue (201).

4. Dispositif antivol selon la revendication 1, **caractérisé en ce que** ledit dispositif antivol comprend en outre :
un deuxième élément de sollicitation (55) disposé pour solliciter ladite région de support inférieure de ladite plaque de support (52) pour la faire tourner autour du premier axe d'articulation (X1) pour l'éloigner de ladite plaque de montage (51) et la déplacer vers une position complètement ouverte ; et
un troisième élément de sollicitation (56) disposé entre ladite plaque d'ancrage (53) et ladite plaque de support (52) pour solliciter ladite extrémité d'ancrage (531) pour la faire tourner autour du second axe d'articulation (X2) de sorte que, une fois que ladite plaque de support (52) est déplacée jusqu'à la position complètement ouverte, ladite extrémité d'ancrage (531) soit séparée de la contre-coque (101).

5. Dispositif antivol selon la revendication 1, **caractérisé en ce que** ledit dispositif antivol comprend en outre un quatrième élément de sollicitation (57) disposé pour solliciter ladite extrémité à poids (542) pour entrer en prise avec ladite partie d'ancrage (512).

6. Dispositif antivol selon la revendication 1, **caractérisé en ce que** chaque élément parmi ledit bouton (43) et ledit levier (54) comporte une partie de butée arrière (432, 543), ledit pêne demi-tour (62) étant disposé pour pouvoir tourner entre les positions de verrouillage et de déverrouillage, et comportant deux extrémités de retenue (621) qui sont disposées pour prendre appui respectivement contre lesdites parties de butée arrière dans la position de verrouillage.

7. Dispositif antivol selon la revendication 3, **caractérisé en ce que** l'élément de retenue (201) est une bague de retenue qui définit un espace de retenue (202), ledit dispositif antivol comprenant en outre un cadre de base (41) qui comporte une ouverture (412), et qui est adapté pour être installé dans et fixé à la paroi inférieure de sorte que la bague de retenue (201) s'étende à travers ladite ouverture (412), ledit élément retenu (44) étant monté de façon mobile sur ledit cadre de base (41) et étant pourvu d'une protubérance retenue (441) de sorte que, lorsque ladite extrémité d'actionnement (433) est dans la position normale, ledit élément retenu (44) soit sollicité par ledit premier élément de sollicitation (45) pour entrer en prise avec la bague de retenue (201) alors que ladite protubérance retenue (441) est mise en mouvement vers l'avant afin d'être reçue dans l'espace de retenue (202).
